# EUROPEAN PATENT APPLICATION

(11) **EP 2 394 854 A2**
(43) Date of publication of application: **14.12.2011**
(21) Application number: 10191906.6
(22) Date of filing: 19.11.2010
(51) Int. Cl.: B60R 1/00

(54) **All-around parking assisting system**

(30) Priority: 09.06.2010 CN 201020231145 U; 11.10.2010 US 901621
(71) Applicant: Delphi Technologies, Inc., Troy, MI 48007 (US)
(72) Inventor: Zhang, Licun, 200131, Pudong Shanghai (CN); Ye, Lingxia, 200131 Shanghai (CN); Zeng, Yi, 200131 Shanghai (CN)
(74) Representative: Denton, Michael John

(57) **Abstract**

An all-around parking assisting system (100) is disclosed according to the present disclosure. The system includes a set of image collecting apparatuses (102), a set of image pre-processing apparatuses (104), an image synthesis apparatus (106), an image correcting apparatus (108) and a display apparatus (110). The set of image collecting apparatuses (102), positioned at the peripheral of a vehicle, is configured to collect a group of images relating to surroundings of the vehicle. The image correcting apparatus (108) is configured to adjust the proportion of the group of pre-processed images in the continuous image based on a correction parameter and generate a corrected continuous image. The display apparatus (110) is configured to display the continuous image generated by the image synthesis apparatus (106) or the corrected continuous image displayed by the image correcting apparatus (108).

## Description

### TECHNICAL FIELD

The present disclosure relates to automobile components, and more specifically, to an all-around parking assisting system.

### BACKGROUND OF THE INVENTION

For vehicle drivers, especially for those beginners, parking can be a challenge. Many beginners believe it difficult to park a car. It takes a lot of time for the beginners to park into a relatively small space. In addition, even for experienced drivers, parking is still believed to be accident-prone. Some minor scratches occur frequently during parking, especially when parking a car in a strange place. If we analyze the process of parking, one may find out that the difficulty in parking is mainly attributed to the following two reasons:

1) There are too many things to take care of during parking. The driver is unable to attend to everything at one time.

Normally, when driving on the road, the driver's attention is focused on the front, with sometimes taking a glance at the car side mirrors and rear-view mirror. However, as for parking, the driver has to pay attention to all the situations around. During parking, side mirrors and the rear-view mirror provide most of the vision for the driver, which requires special attention. The front and side windows also need to be observed. Otherwise, collision is likely to occur at the front or the side. It is difficult for a novice to observe several directions at the same time, which may otherwise cause hurry-scurry during parking. This may increase the difficulty in parking.

2) Blind-area exists.

Relying only on side mirrors, rear-view mirror, and car windows are not enough. Blind-areas still exist. The most dangerous blind-areas are at the four corners of the vehicle, and the positions below the front and rear bumpers. Even for experienced drivers, it is still difficult for them to observe blind-areas. Some drivers will get off the car to observe in advance the blind-areas. But this is neither easy nor safe.

To assist parking, the automotive industry has developed a number of auxiliary electronic systems and devices. Auxiliary electronic equipment may mainly include the following: distance detection equipment such as radar, infrared, etc., and visual equipments. The distance detection equipments may be used to detect obstacles near the vehicle and alarm when the distance to the obstacle is less than a preset distance. The visual equipment generally includes a display and a camera for capturing surrounding images and displaying the images on the display.

The utilization of the auxiliary electronic equipment allows the driver to focus on the display and the display can be installed at such a position that the blind-area can be eliminated as much as possible. Such auxiliary electronic equipment helps to reduce the aspects to be observed during parking, and broaden the driver's vision, thus playing a big role in parking.

In terms of the convenience of the operation, if a top-down perspective is available to overlook the surrounding environment of vehicle and the trace of the vehicle, it would be the best way to assist parking. Currently, such device has also been developed. The device generally includes a plurality of cameras installed at each direction of the vehicle. These cameras collect images for all directions around the vehicle. Then, these images are synthesized to get an overall image showing the surroundings of the vehicle. Finally, the display displays the overall picture. The middle of the overall picture is empty, which is used to display the car's shape. In this way, the driver may have a feeling that he has gained a top-down perspective, as if he is manipulating his vehicle at a high place. Although the equipment has been a huge breakthrough, it still can be improved. For example, the images captured by cameras are spliced in a simple way to form an overall image. As a result, the overall image may have some flaws in the splicing portions. Some portions may appear repeatedly, while some portions may appear with different sizes in different images. Blind-area may exist at the interspace between shooting ranges of two cameras. In addition, for the drivers, the extent of attention to be paid to each direction may be different. For example, when parking close to a wall, the driver may wish to pay more attention to the wall side rather than the side away from the wall. As far as the existing equipment is concerned, the overall image gives a unanimous attention for all directions, which is not able to emphasize the aspect of interest for the driver. Another drawback is that although the overall image is able to show the situation around the vehicle, it does not tell the driver how to park into a parking lot without touching any obstacles, which is also critical for the beginner.

### SUMMARY OF THE INVENTION

The present disclosure is directed to an all-around parking assisting system. The system may not only be able to provide a continuous image reflecting the surroundings of the vehicle, but also allow the driver to pay attention to a particular direction as desired. In addition, the system may also prompt the driver in terms of the operation.

An all-around parking assisting system is provided according to an embodiment of the present disclosure. The system includes a set of image collecting apparatuses, a set of image pre-processing apparatuses, an image synthesis apparatus, an image correcting apparatus and a display apparatus. The set of image collecting apparatuses, positioned at the periphery of a vehicle, is configured to collect a group of images relating to the surroundings of the vehicle. Each image pre-processing apparatus in the set of image pre-processing apparatuses corresponds to one of the image collecting apparatuses and is configured to pre-process the image collected by the image collecting apparatus. The image synthesis apparatus is coupled to the set of image pre-processing apparatuses. The image synthesis apparatus may synthesize a group of pre-processed images and generate a continuous image relating to the surroundings of the vehicle. The image correcting apparatus is coupled to the image synthesis apparatus and is configured to adjust the proportion of the group of pre-processed images in the continuous image based on a correction parameter and generate the corrected continuous image. The display apparatus is coupled to the image synthesis apparatus and the image correcting apparatus. The display apparatus is configured to display the continuous image generated by the image synthesis apparatus or the corrected continuous image displayed by the image correcting apparatus.

The set of image collecting apparatuses may be a set of cameras. For instance, the set of image collecting apparatuses may include four cameras, which are positioned at the front, rear, left and right side of the vehicle, respectively. The image captured by each of the four cameras overlaps partially with an image captured by its neighboring camera.

The image synthesis apparatus includes an angle rotation apparatus and a synthesis apparatus. The angle rotation apparatus is coupled to the set of image pre-processing apparatuses. An angle rotation parameter is determined based on the position of each image pre-processing apparatus mounted on the vehicle and the image generated by the image pre-processing apparatus may be rotated according to the angle rotation parameter. The synthesis apparatus, coupled to the angle rotation apparatus, is configured to determine a synthesis parameter based on characteristic points of the images generated by the set of image pre-processing apparatus and synthesize the group of the rotated images into the continuous image according to the synthesis parameter.

The image correcting apparatus may include a vision adjustment apparatus and a connection adjustment apparatus. The vision adjustment apparatus adjusts the proportion of each of pre-processed images displayed in the continuous image. The connection adjustment apparatus is coupled to the vision adjustment apparatus. The connection adjustment apparatus adjusts the joint between the resized neighboring images in the continuous image, according to the characteristic point.

In one embodiment, the all-around parking assisting system may further include an obstacle detecting apparatus and a warning apparatus. The obstacle detecting apparatus, coupled to the display apparatus, is configured to determine an obstacle in the continuous image or the corrected continuous image displayed on the display apparatus. The warning apparatus, coupled to the obstacle detecting apparatus and the display apparatus, is configured to determine an obstacle which is nearest to the vehicle and highlight the obstacle in the display apparatus. The warning apparatus may provide warning by generating sound or flickering the obstacle on the display apparatus.

In one embodiment, the all-around parking assisting system may further include a guiding apparatus coupled to the obstacle detecting apparatus and the display apparatus. The guiding apparatus is configured to determine a predicted path detouring the obstacle and display the predicted path on the display apparatus. The guiding apparatus is further configured to display a current wheel angle and predicted wheel angle on the display apparatus so as to further assist the driver.

According to the present disclosure, the all-around parking assisting system is able to provide a continuous image showing the environment surrounding the vehicle. The continuous image is able to reflect the situation surrounding the vehicle truly and comprehensively. The system is further able to allow the driver to pay attention to a particular desired direction by performing image correction so that the image relating to the desired direction may take up more areas in the continuous image. In the meantime, the system is also able to provide prompt to assist the driver.

### BRIEF DESCRIPTION OF THE DRAWINGS

The foregoing and other features, characters and advantages of the present disclosure will become more readily appreciated by reference to the following description of the embodiments, when taken in conjunction with the accompanying drawings where the same reference sign in the drawings represents the same feature, wherein:

FIG. 1 illustrates a diagram of an all-around parking assisting system according to one embodiment of the present disclosure;

FIG. 2 illustrates a diagram of an all-around parking assisting system according to another embodiment of the present disclosure;

FIG. 3a-3d are illustrations of vision adjustment based on the all-around parking assisting system according to one embodiment of the present disclosure; and

FIG. 4 is an illustration of guiding the angles of car wheels based on the all-around parking assisting system according to one embodiment of the present disclosure.

### DESCRIPTION OF THE PREFERRED EMBODIMENTS

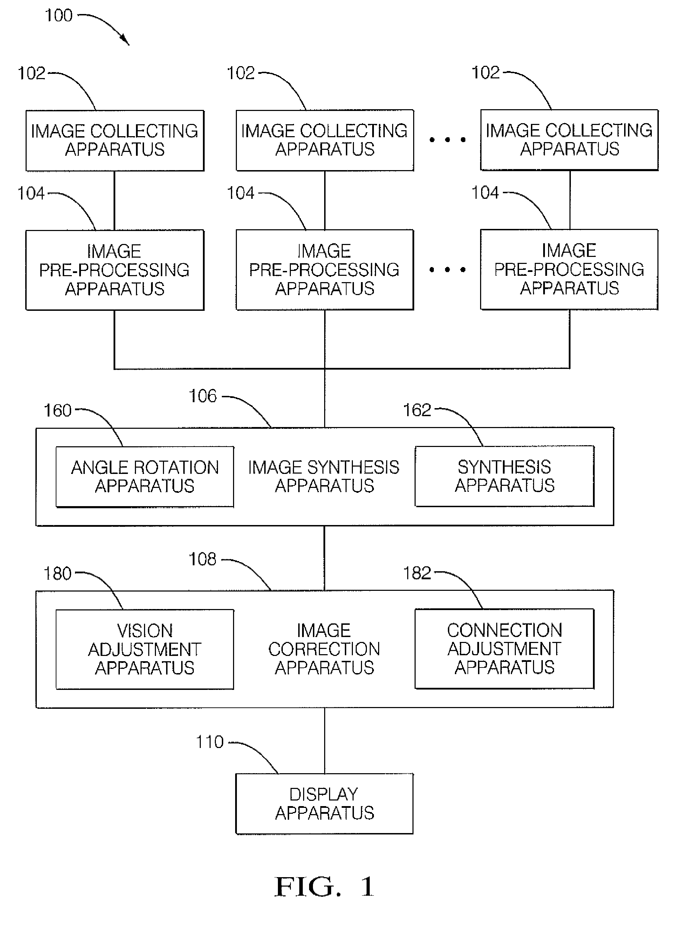

FIG. 1 illustrates an all-around parking assisting system 100 according to an embodiment of the present disclosure. The system includes a set of image collecting apparatuses 102, a set of image pre-processing apparatuses 104, an image synthesis apparatus 106, an image correcting apparatus 108 and a display apparatus 110.

The set of image collecting apparatuses 102 are preferably disposed at the outer periphery of the vehicle. The set of image collecting apparatuses 102 collect a group of images relating to the surroundings of the vehicle as viewed outwardly by an operator. The set of image collecting apparatuses 102 may be a set of cameras. For instance, the set of image collecting apparatuses may include four cameras, which are positioned at the front, rear, left and right side of the vehicle. The four cameras are used to capture the front, rear, left and right images, respectively. It is to be noted that the image captured by each of the four cameras overlaps partially with the image captured by its adjacent camera(s). The overlapped portion may be regarded as a characteristic point for serving as a basis for smooth connection between images and angle rotation and proportion adjustment of the images.

Each image pre-processing apparatus 104 in the set of image pre-processing apparatuses 104 corresponds to one of the image collecting apparatuses 102. The image pre-processing apparatus 104 pre-processes the image collected by the associated image collecting apparatus 102. The pre-processing carried out by the image pre-processing apparatus 104 includes adjusting the distortion of the image collected by the camera. Since the image captured by the camera is called "fisheye viewed" image where the image is distorted from the real image, the image pre-processing apparatus 104 may process the "fisheye viewed" image and convert it into real image corresponding to images as viewed directly by the vehicle operator. This technique is widely adopted in the industry, which is omitted herein for brevity.

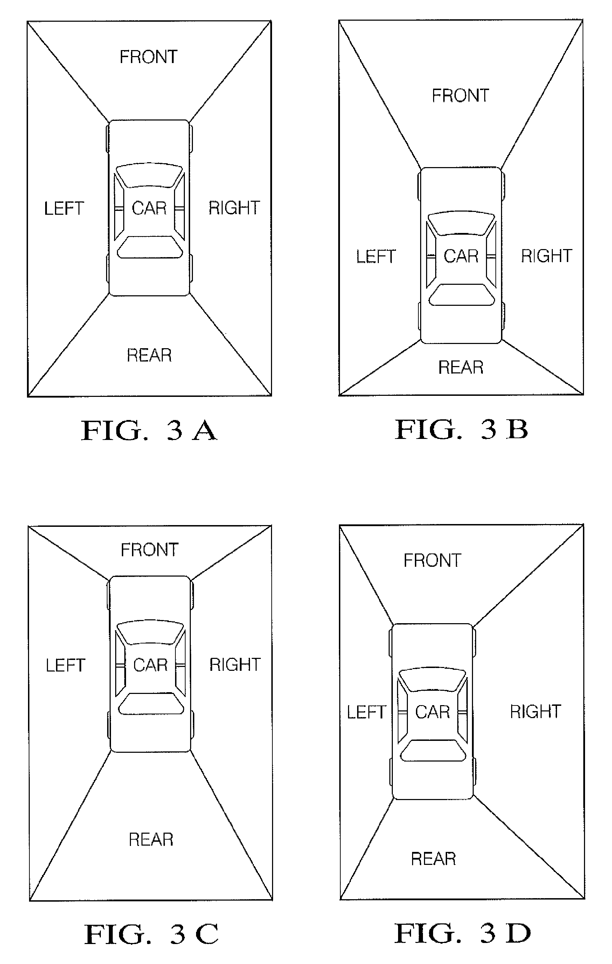

The image synthesis apparatus 106 is coupled to the set of image pre-processing apparatuses 104. The image synthesis apparatus 106 may synthesize a group of the pre-processed images and generate a continuous image relating to the surroundings of the vehicle. Referring to the embodiment illustrated in FIG. 1, the image synthesis apparatus 106 may include an angle rotation apparatus 160 and a synthesis apparatus 162. The angle rotation apparatus 160 is coupled to the set of image pre-processing apparatuses 104. An angle rotation parameter is determined based on the position of each image pre-processing apparatus mounted on the vehicle and the image generated by the image pre-processing apparatus may be rotated according to the angle rotation parameter. In the present disclosure, the angle rotation has the following meanings: after the image captured by a single camera is processed by the image pre-processing apparatus 104, the image may take up a rectangular area when being displayed. That is to say, the image is a rectangular image. As for the image synthesized by the image synthesis apparatus 106, the four cameras share a rectangular area which is used to display the vehicle itself, as illustrated in FIG. 3a. For each camera, the image it captures needs to be displayed in a trapeziform area (referring to FIG. 3a). For each trapeziform area, the side close to the vehicle is narrow, while the side away from the vehicle is wide. The angle and proportion as to the transition from the narrow side to the wide side are decided by the position of the camera in relative to the outer surface of the vehicle. For instance, take the above four cameras as an example by reference to FIG. 3a, the image taken by the camera at the front of the vehicle needs to be transformed into a trapezium which is narrowed at the close side and widened at the far side. The image taken by the camera at the left side of the vehicle also needs to be transformed into a trapezium which is narrowed at the close side and widened at the far side. However, in the resulting image displayed, since the trapezium corresponding to the left camera is larger than the trapezium corresponding to the front camera, the angle rotation apparatus 160 needs to rotate the angle of the image taken by the front camera and the angle of the image taken by the left camera differently. The narrowest portion of the image taken by the left camera is wider than the narrowest portion of the image taken by the front camera. In addition, the extent of expansion (the angle of the bevel edge of the trapezium) for these two trapezia is also different. As stated above, the position of the camera mounted on the vehicle determines the way to perform angle rotation. Accordingly, the angle rotation apparatus 160 may determine an angle rotation parameter based on the position of the camera mounted on the vehicle and rotate the image taken by the camera according to the angle rotation parameter. As such, the image taken by each camera becomes to be the shape of the area taking up in resulting continuous image. It is to be noted that more cameras can be utilized. If there are more cameras, the area of the image captured by each camera taking up in the resulting continuous image may no longer be a rectangular, but other polygon. The angle rotation apparatus 160 may determine an angle rotation parameter based on the position of the camera mounted on the vehicle and rotate the camera image to be a desired shape according to the angle rotation parameter. Furthermore, it is to be noted that in most cases, the vision seen from the image processed by the angle rotation apparatus 160 may contain less content than that of the raw image captured by the camera. It is only a part of the vision seen from the raw image. The synthesis apparatus 162 is coupled to the angle rotation apparatus 160 and may combine the images processed by the angle rotation apparatus 160 into a continuous image. As previously described, the image captured by each camera overlaps with the image captured by its neighboring camera. These overlaps may be treated as a characteristic point. Since the angle rotation apparatus 160 has already transformed the image captured by each camera, combination has to be performed based on these characteristic points. Before the angle rotation apparatus 160 performs angle rotation, the overlaps are marked up. After angle rotation, although the proportions between the images have been changed, the proportion of the image to its neighboring image may be derived from the marked characteristic point. The synthesis apparatus 160 may align the marked characteristic points of the neighboring images and further adjust the proportion of the images so as to obtain a continuous image. The proportion of each image is adjusted based on the characteristic point in the image generated by the set of image pre-processing apparatus. The proportion to be adjusted is treated as a synthesis parameter. The synthesis apparatus 162 may synthesize the group of the rotated images into a continuous image based on the synthesis parameter. It is to be noted that during the process of proportion adjustment, the vision of the image taken by the camera may be further narrowed. In other words, the image may be truncated to some level so as to agree with the camera having the narrowest vision in order to form a continuous image.

The image correcting apparatus 108 is coupled to the image synthesis apparatus 106 and is configured to adjust the proportion of the group of pre-processed images displayed in the continuous image based on the correction parameter and generate the corrected continuous image. Referring to the embodiment illustrated in FIG. 1, the image correcting apparatus 108 may include a vision adjustment apparatus 180 and a connection adjustment apparatus 182. The vision adjustment apparatus 180 adjust the proportion of each of the pre-processed images displayed in the continuous image. As previously described, in the process of forming a continuous image, the images of some cameras are truncated. That is to say, some of the other cameras have gained a broader vision. A mechanism for utilizing these broad visions is provided according to the present disclosure. Referring to FIGs. 3a-3d, the vision of a camera is broadened by vision adjustment according to the present disclosure. After the view is broadened, the image taken by the camera may take up more areas in the resulting continuous image. The vision adjustment apparatus 180 is configured to implement the broadening process. The vision adjustment apparatus 180 may expand the areas (i.e., the area of the trapezium) corresponding to the selected camera, such as the front camera shown in FIG. 3b, the rear camera shown in FIG. 3c, the right camera shown in FIG. 3d. As such, the area may display a broader vision. The user may adjust the size of each surrounding trapezium in order to adjust vision by moving the rectangular "car" area located at the center of the display area. The vision adjustment apparatus 180 may determine based on the location of the "car" area whether the image taken by each camera needs to be expanded or decreased. The connection adjustment apparatus 182 is coupled to the vision adjustment apparatus 180. The connection adjustment apparatus 182 adjusts the joint between the resized neighboring images in the continuous image, according to the characteristic point. The vision adjustment apparatus 180 adjusts the image taken by each camera based on the newly determined shape. Since the visions of some of the cameras are expanded, the joint between the neighboring images may be discontinuous. The connection adjustment apparatus 182 is configured to correct the joint between the neighboring images. The connection adjustment apparatus 182 performs correction based on the characteristic points, which is the overlapped portion of the images. The joint between the neighboring images will become continuous after corresponding adjustment is performed based on the relationship between the characteristic points.

The display apparatus 110 is coupled to the image synthesis apparatus 106 and the image correcting apparatus 108. The display apparatus 110 displays the continuous image generated by the image synthesis apparatus 106 or the corrected continuous image displayed by the image correcting apparatus 108. The display apparatus 110 may be implemented with various existing displays.

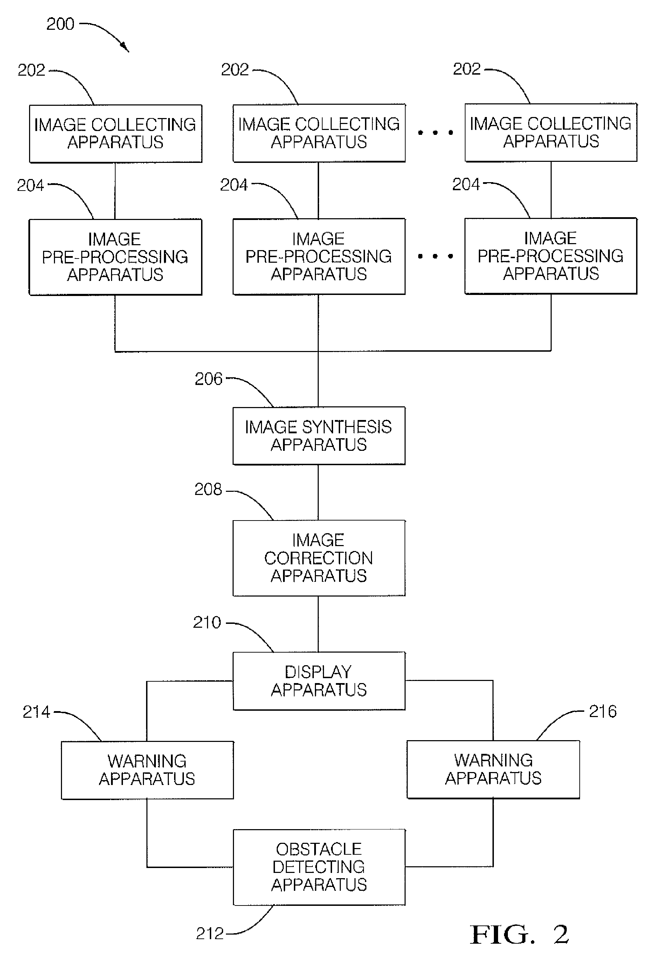

FIG. 2 illustrates an all-around parking assisting system 200 according to another embodiment of the present disclosure. The system includes a set of image collecting apparatuses 202, a set of image pre-processing apparatuses 204, an image synthesis apparatus 206, an image correcting apparatus 208 and a display apparatus 210.

The set of image collecting apparatuses 202 are disposed at the peripheral of the vehicle. The set of image collecting apparatuses collect a group of images relating to the surroundings of the vehicle. The set of image collecting apparatuses 202 may be a set of cameras. For instance, the set of image collecting apparatuses may include four cameras, which are positioned at the front, rear, left and right side of the vehicle. The four cameras are used to capture the front, rear, left and right images, respectively. It is to be noted that the image captured by each of the four cameras overlaps partially with the image captured by its neighboring camera. The overlapped portion may be regarded as a characteristic point for serving as a basis for smooth connection between images and the angle rotation and proportion adjustment of the images.

Each image pre-processing apparatus in the set of image pre-processing apparatuses 204 corresponds to one of the image collecting apparatuses 202. The image pre-processing apparatus 204 pre-processes the image collected by the image collecting apparatus 202. The pre-processing carried out by the image pre-processing apparatus 204 includes adjusting the distortion of the image collected by the camera. Since the image captured by the camera is called "fisheye viewed" image where the image is distorted from the real image, the image pre-processing apparatus 204 may process the "fisheye viewed" image and convert it into real image. This technique is widely adopted in the industry, which is omitted herein for brevity.

The image synthesis apparatus 206 is coupled to the set of image pre-processing apparatuses 204. The image synthesis apparatus 106 may synthesize a group of pre-processed images and generate a continuous image relating to the surroundings of the vehicle. The image synthesis apparatus 206 includes an angle rotation apparatus and a synthesis apparatus. The angle rotation apparatus is coupled to the set of image pre-processing apparatuses 204. An angle rotation parameter is determined based on the position of each image pre-processing apparatus mounted on the vehicle and the image generated by the image pre-processing apparatus may be rotated according to the angle rotation parameter. In the present disclosure, the angle rotation has the following meanings: after the image captured by a single camera is processed by the image pre-processing apparatus 204, the image may take up a rectangular area when being displayed. That is to say, the image is a rectangular image. As for the image synthesized by the image synthesis apparatus 206, the four cameras share a rectangular area which is used to display the vehicle itself, as illustrated in FIG. 3a. For each camera, the image it captures needs to be displayed in a trapeziform area (referring to FIG. 3a). For each trapeziform area, the side close to the vehicle is narrow, while the side away from the vehicle is wide. The angle and proportion as to the transition from the narrow side to the wide side are decided by the position of the camera in relative to the peripheral of the vehicle. For instance, take the above four cameras as an example by reference to FIG. 3a, the image taken by the camera at the front of the vehicle needs to be transformed into a trapezium which is narrowed at the close side and widened at the far side. The image taken by the camera at the left side of the vehicle also needs to be transformed into a trapezium which is narrowed at the close side and widened at the far side. However, in the resulting image displayed, since the trapezium corresponding to the left camera appears larger than the trapezium corresponding to the front camera, the angle rotation apparatus needs to rotate the angle of the image taken by the front camera and the angle of the image taken by the left camera differently. The narrowest portion of the image taken by the left camera is wider than the narrowest portion of the image taken by the front camera. In addition, the extent of expansion (the angle of the bevel edge of the trapezium) for these two trapezia is also different. As stated above, the position of the camera mounted on the vehicle determines the way to perform angle rotation. Accordingly, the angle rotation apparatus 160 may determine an angle rotation parameter based on the position of the camera mounted on the vehicle and rotate the image taken by the camera according to the angle rotation parameter. As such, the image taken by each camera becomes to be the shape of the area taking up in resulting continuous image. It is to be noted that more cameras can be utilized. If there are more cameras, the area of the image captured by each camera taking up in the resulting continuous image may no longer be a rectangular, but other polygon. The angle rotation apparatus may determine an angle rotation parameter based on the position of the camera mounted on the vehicle and rotate the image to be a desired shape according to the angle rotation parameter. Furthermore, it is to be noted that in most cases, the vision seen from image processed by the angle rotation apparatus may contain less content than that of the raw image captured by the camera. It is only part of the vision seen from the raw image. The synthesis apparatus is coupled to the angle rotation apparatus and may combine the images processed by the angle rotation apparatus into a continuous image. As previously described, the image captured by each camera overlaps with the image captured by its neighboring camera. These overlaps may be treated as a characteristic point. Since the angle rotation apparatus has already transformed the image captured by each camera, combination has to be performed based on these characteristic points. Before the angle rotation apparatus performs angle rotation, the overlaps are marked up. After angle rotation, although the proportions between the images have been changed, the proportion of the image to its neighboring image may be derived from the marked characteristic point. The synthesis apparatus may align the marked characteristic points of the neighboring images and further adjust the proportion of the images so as to obtain a continuous image. The proportion of each image is adjusted based on the characteristic point in the image generated by the set of image pre-processing apparatus. The proportion to be adjusted is treated as a synthesis parameter. The synthesis apparatus may synthesize the group of the rotated images into a continuous image based on the synthesis parameter. It is to be noted that during the process of proportion adjustment, the vision of the image taken by the camera may be further narrowed. In other words, the image may be truncated to some level so as to agree with the camera having the narrowest vision in order to form a continuous image.

The image correcting apparatus 208 is coupled to the image synthesis apparatus 206 and is configured to adjust the proportion of the group of the pre-processed images in the continuous image based on the correction parameter and generate the corrected continuous image. Referring to the embodiment illustrated in FIG. 2, the image correcting apparatus 208 may include a vision adjustment apparatus and a connection adjustment apparatus. The vision adjustment apparatus adjusts the proportion of each of the pre-processed images displayed in the continuous image. As previously described, in the process of forming a continuous image, the images of some cameras are truncated. That is to say, some of the other cameras have gained a broader vision. A mechanism for utilizing these broad visions is provided according to the present disclosure. Referring to FIGs. 3a-3d, the vision of a camera is broadened by vision adjustment according to the present disclosure. After the vision is broadened, the image taken by the camera may take up more areas in the resulting continuous image. The vision adjustment apparatus is configured to implement the broadening process. The vision adjustment apparatus may expand the areas (i.e., the area of the trapezium) corresponding to the selected camera, such as the front camera shown in FIG. 3b, the rear camera shown in FIG. 3c, the right camera shown in FIG. 3d. As such, the area may display a broader vision. The user may adjust the size of each surrounding trapezium in order to adjust vision by moving the rectangular "car" area located at the center of the display area. The vision adjustment apparatus may determine based on the location of the "car" area whether the image taken by each camera needs to be expanded or decreased. The connection adjustment apparatus is coupled to the vision adjustment apparatus. The connection adjustment apparatus adjusts the joint between the resized neighboring images in the continuous image, according to the characteristic point. The vision adjustment apparatus adjusts the image taken by each camera based on the newly determined shape. Since the visions of some of the cameras are expanded, the joint between the neighboring images may be discontinuous. The connection adjustment apparatus is configured to correct the joint between the neighboring images. The connection adjustment apparatus performs correction based on the characteristic points, which is the overlapped portion of the images. The joint between the neighboring images will become continuous after corresponding adjustment is performed based on the relationship between the characteristic points.

The display apparatus 210 is coupled to the image synthesis apparatus 206 and the image correcting apparatus 208. The display apparatus 210 displays the continuous image generated by the image synthesis apparatus 206 or the corrected continuous image displayed by the image correcting apparatus 208. The display apparatus 210 may be implemented with various existing displays.

An obstacle detecting apparatus 212 is coupled to the display apparatus 210. The obstacle detecting apparatus 212 determines an obstacle in the continuous image or the corrected continuous image displayed by the display apparatus 210. The technique for detecting obstacles in the image displayed by the display apparatus may refer to CN application No. 200920008222.2, entitled "VEHICLE HANDLING ASSISTANT APPARATUS", whose applicant is the same as the applicant of the present application. The entire content is omitted herein for brevity.

A warning apparatus 214 is coupled to the obstacle detecting apparatus 212 and the display apparatus 210. The warning apparatus 214 is configured to determine the obstacle which is nearest to the vehicle and highlight the obstacle in the display apparatus 210. The warning apparatus 214 computes the distance from the vehicle to each obstacle detected by the obstacle detecting apparatus 214. For the obstacle nearest to the vehicle, the warning apparatus 214 labels this obstacle as "most dangerous area". The warning apparatus 214 provides warning in terms of this obstacle. The approach of warning may include highlighting the obstacle, such as flickering the obstacle or displaying the obstacle in different colors. In one embodiment, the warning apparatus 214 may further include a sound-generating apparatus for making sound when the obstacle is highlighted.

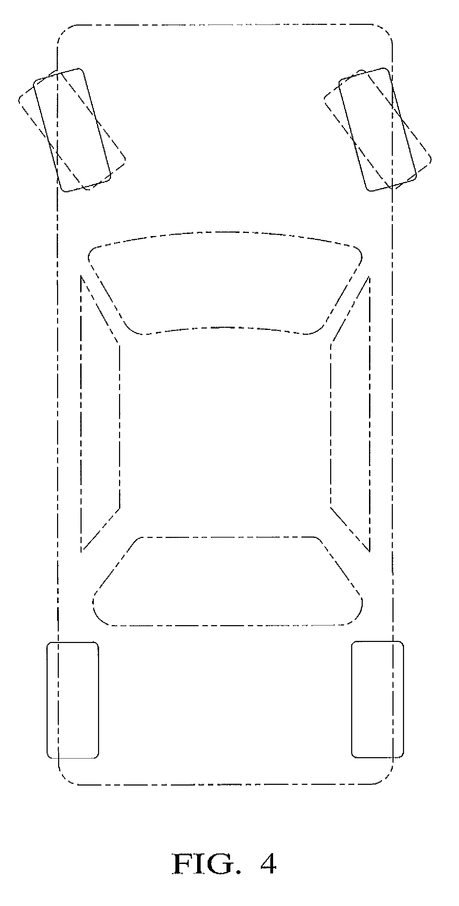

A guiding apparatus 216 is coupled to the obstacle detecting apparatus 212 and the display apparatus 210. The guiding apparatus 216 is configured to determine a predicted path detouring the obstacle and display the predicted path on the display apparatus 210. The technique for calculating the path detouring the obstacle and displaying the predicted path may refer to CN application No. 201020109799.5, entitled "PARKING GUIDANCE SYSTEM", whose applicant is the same as the applicant of the present application. The entire content is omitted herein for brevity. The technique for predicting the driving path based on the direction of the wheels and displaying the predicted path may refer to CN application No. 200920008223.7, entitled "HANDLING ASSISTANT APPARATUS FOR TWO-BODY CONNECTED VEHICLE" and CN application No. 201020109799.5, entitled "PARKING GUIDANCE SYSTEM", the applicant of the two applications is the same as the applicant of the present application. The entire contents are omitted herein for brevity. Referring to FIG. 4, in the present disclosure, the guiding apparatus 216 may also display the current wheel angle and predicted wheel angle on the display apparatus 210. Since the wheels are the parts that can be directly operated by the driver, it is clearer to directly display the current wheel angle and predicted wheel angle than to display the predicted driving path. This is more conducive in assisting the driver's operation.

According to the present disclosure, the all-around parking assisting system is able to provide a continuous image of the environment surrounding the vehicle. The continuous image is able to reflect the situation surrounding the vehicle truly and comprehensively. The system is further able to allow the driver to pay attention to a particular desired direction by performing image correction so that the image relating to the desired direction may take up more areas in the continuous image. In the meantime, the system is also able to provide prompt to the driver.

## Claims

1. An all-around parking assisting system (100), comprising:
a set of image collecting apparatuses (102), positioned at the peripheral of a vehicle, for collecting a group of images relating to surroundings of the vehicle;
a set of image pre-processing apparatuses (104), wherein each image pre-processing apparatus (104) corresponds to one of the image collecting apparatuses (102) and is configured to pre-process the image collected by the image collecting apparatus (102);
an image synthesis apparatus (106) coupled to the set of image pre-processing apparatuses (104) for synthesizing a group of the pre-processed images and generating a continuous image relating to the surroundings of the vehicle;
an image correcting apparatus (108) coupled to the image synthesis apparatus (106), for adjusting the proportion of the group of pre-processed images displayed in the continuous image based on a correction parameter and generating a corrected continuous image; and
a display apparatus (110) coupled to the image synthesis apparatus (106) and the image correcting apparatus (108), for displaying the continuous image generated by the image synthesis apparatus (106) or the corrected continuous image displayed by the image correcting apparatus (108).

2. The system (100) of claim 1, wherein the set of image collecting apparatuses (102) is a set of cameras.

3. The system (100) of claim 2, wherein the set of group image collecting apparatuses (102) comprises four cameras positioned at the front, rear, left and right of the vehicle, respectively; and an image captured by each of the four cameras overlaps partially with an image captured by a neighboring camera.

4. The system (100) as set in any of the preceding claim, wherein the image synthesis apparatus (106) comprises:
an angle rotation apparatus (160) coupled to the set of image pre-processing apparatuses (104), configured to determine an angle rotation parameter based on the position of each image pre-processing apparatus (104) on the vehicle and rotate the image generated by the image pre-processing apparatus (104) according to the angle rotation parameter; and
a synthesis apparatus (162) coupled to the angle rotation apparatus (160), configured to determine a synthesis parameter based on characteristic points of the images generated by the set of image pre-processing apparatus (104) and synthesize the group of the rotated images into the continuous image according to the synthesis parameter.

5. The system (100) as set in any of the preceding claim, wherein the image correcting apparatus (108) comprises:
a vision adjustment apparatus (180), configured to adjust the proportion of each of pre-processed images displayed in the continuous image; and
a connection adjustment apparatus (182) coupled to the vision adjustment apparatus (180), configured to adjust a joint between resized neighboring images in the continuous image, according to the characteristic point.

6. The system (100, 200) of claim 1, further comprising:
an obstacle detecting apparatus (212) coupled to the display apparatus (110, 210), configured to determine an obstacle in the continuous image or the corrected continuous image displayed on the display apparatus (110, 210).

7. The system (100, 200) of claim 6, further comprising:
a warning apparatus (214) coupled to the obstacle detecting apparatus (212) and the display apparatus (210), configured to determine an obstacle which is nearest to the vehicle and highlight the obstacle in the display apparatus (210).

8. The system (100, 200) as set in any of the claim 6 or 7, wherein the warning apparatus (214) further comprises a sound-generating apparatus.

9. The system (100, 200) as set in any of the claim 6 to 8, further comprising:
a guiding apparatus (216) coupled to the obstacle detecting apparatus (212) and the display apparatus (210), configured to determine a predicted path detouring the obstacle and display the predicted path on the display apparatus (210).

10. The system (100, 200) of claim 9, wherein the guiding apparatus (216) is further configured to display a current wheel angle and predicted wheel angle on the display apparatus (210).

11. A vehicle parking assist system, comprising an all-around parking assisting system (100) as set in any of the preceding claim.
